Europäisches Patentamt

European Patent Office

Office européen des brevets

(11) Veröffentlichungsnummer: **0 378 589 B1**

## (12) EUROPÄISCHE PATENTSCHRIFT

(45) Veröffentlichungstag der Patentschrift: **20.10.93**

(21) Anmeldenummer: **89901949.1**

(22) Anmeldetag: **17.01.89**

(86) Internationale Anmeldenummer:
**PCT/EP89/00045**

(87) Internationale Veröffentlichungsnummer:
**WO 89/06764 (27.07.89 89/16)**

Verbunden mit 89200232.0/0334401
(europäische
Anmeldenummer/Veröffentlichungsnummer)
durch Entscheidung vom 03.08.92.

(51) Int. Cl.5: **F16K  11/07**, F16K 37/00,
F16K 25/02

(54) **Ventilvorrichtung.**

(30) Priorität: **20.01.88 DE 3801569**

(43) Veröffentlichungstag der Anmeldung:
**25.07.90 Patentblatt  90/30**

(45) Bekanntmachung des Hinweises auf die
Patenterteilung:
**20.10.93 Patentblatt  93/42**

(84) Benannte Vertragsstaaten:
**AT BE CH DE ES FR GB GR IT LI LU NL SE**

(56) Entgegenhaltungen:
EP-A- 0 257 539     WO-A-88/05512
BE-A- 447 878       DE-A- 2 027 792
DE-A- 3 701 027     FR-A- 2 222 590
US-A- 2 659 568     US-A- 3 283 783
US-A- 3 643 700     US-A- 4 374 583
US-A- 4 664 151

(73) Patentinhaber: **Mieth, Hans Otto, Dipl.-Ing.
Sandkrug 3
D-21481 Schnakenbek(DE)**

(72) Erfinder: **Mieth, Hans Otto, Dipl.-Ing.
Sandkrug 3
D-21481 Schnakenbek(DE)**

(74) Vertreter: **DIEHL GLAESER HILTL & PARTNER
Patentanwälte
Königstrasse 28
D-22767 Hamburg (DE)**

EP 0 378 589 B1

**Beschreibung**

Die Erfindung betrifft eine Ventilvorrichtung zur Durchflußsteuerung eines Mediums wach dem Oberbegriff des Patentanspruchs 1.

Der bislang bekannt gewordene Stand der Technik auf dem Gebiet der sogenannten Mehrwege-Umschaltventile mit Leckagesicherung ist beispielsweise aus der DE-A-2 027 792 ersichtlich. Dieses Ventil befriedigt in seiner Reinigungs- und/oder Sterilisierstellung (vergl. Spalte 5, Zeilen 40ff.) die zu stellende Mindestanforderung, daß namlich jederzeit mindestens zwei Abdichtungen zwischen dem zu verpackenden Füllgut und beispielsweise einem Reinigungsmittel für die Gefäße vorhanden sein müssen und daß der Raum zwischen den Abdichtungen mit einem Reinigungsmittel gespült werden muß. Gemaß der aus dem Bereich der Pneumatik entlehnten Kennzeichnung stellt das bekannte Ventil ein sogenanntes 4/2-Wegeventil dar, denn es verfügt über vier Anschlüsse (drei Gehäuseanschlusse, ein Leckageraumanschluß) und zwei Schaltstellungen. Eine Grundstellung, in der das Ventil vom mittleren Ventilgehauseteil aus, entweder beiderseits offen oder geschlossen ist, ist nicht gegeben. Daruber hinaus wird aus Figur 2 der vorgenannten Druckschrift ersichtlich, daß in der dort dargestellten Füllstellung des Ventils nur eine einfache Abdichtung zwischen dem mittleren Ventilgehauseteil 3 und dem unteren Ventilgehauseteil 4 vorhanden ist. Wahrend in dieser Stellung Produkt vom oberen Ventilgehauseteil 2 in das mittlere Ventilgehauseteil 3 uberführt wird, kann grundsätzlich im unteren Ventilgehauseteil 4 Reinigungsmittel unter Druck anstehen. Eine schadhafte Dichtung im unteren Sitzbereich oder ein Druckstoß aus dem unteren Ventilgehauseteil 4 würde in diesem Falle zu einer Vermischung von Produkt und Reinigungsmittel führen, da der untere Sitzbereich nicht leckagegesichert ist.

Darüber hinaus beschreibt die nicht vorveröffentlichte Patentanmeldung DE-A-37 01 027.1 ein Ventil mit einem Leckageraum, welches mit zwei Abdichtungsstellen ausgestattet ist, die seriell angeordnet sind und in der Schließstellung des Ventils das Uberströmen von Fluiden von einem Ventilgehäuseteil in ein anderes verhindern. Dabei ist der Leckageraum zwischen den Abdichtungsstellen angeordnet und über das Ventilgehause mit der Umgebung des Ventils verbunden. Mit diesem sogenannten Doppelsitzventil wird die verfahrenstechnische Aufgabe gelöst, neben der in der Schließstellung des Ventils an sich bekannten Steuerung des Mediumeintrittes vom Innenraum zum Leckageraum, den Eintritt auch in anderen Stellungen des Ventils zu steuern. Die Lösung der verfahrenstechnischen Aufgabe gelingt dadurch, daß die Verbindung zwischen dem Leckageraum und dem Innenraum in anderen Stellungen als in der Schließstellung des Ventils wirkungsmäßig in gleicher Weise wie in der Schließstellung durch eine das Schließglied hinsichtlich seiner Wechselwirkung mit dem Leckageraum substituierende Vorkehrung gesteuert wird. Hinsichtlich der gegenstandlichen Realisierung ist unter anderem ein Verschlußteil vorgesehen, welches zu dem Schließglied relativ beweglich in Richtung dessen Bewegungsfreiheitsgrades angeordet ist und die Verbindung zwischen dem Leckageraum und dem Innenraum der Ventilgehauseteile steuert. Dabei hat, zumindest in der Offenstellung des Ventils, das Verschlußteil permanent kontakt mit den beiden Abdichtungsstellen, wobei diese durch ventilgehauseseitig oder schließglied- bzw. verschlußteilseitig angeordnete Dichtungsmittel realisiert werden.

Aus der vorgenannten Patentanmeldung ist auch eine Dichtungsanordnung mit zwei voneinander getrennten, ventilgehäuseseitig angeordneten Dichtungen bekannt, wobei in der die Priorität dieser Patentanmeldung beanspruchenden, ebenfalls nicht vorveröffentlichten WO-A-88/05512 diese beiden diskreten Dichtungen unter anderem als Dichtungen mit kreisformigem Querschnitt ausgebildet sind.

Ausgehend vom aufgezeigten Stand der Technik wie er durch die DE-A-2 027 792 bekannt ist, liegt der Erfindung die Aufgabe zugrunde, eine derartige Ventilvorrichtung weiterzubilden.

Die Losung der Aufgabe erfolgt durch eine Ventilvorrichtung mit den Merkmalen des Anspruchs 1.

Vorteilhafte Ausfuhrungsformen der Ventilvorrichtung sind in den Unteransprüchen beschrieben. Es zeigt sich, daß dabei eine Ventilvorrichtung vorgeschlagen wird, die bislang in ihrem Aufbau unbekannt ist.

Mit der vorgeschlagenen Erfindung wird die Realisierung einer komplexen Ventilvorrichtung mit drei Ventilgehäuseteilen, fünf Anschlüssen und drei Schaltstellungen ermöglicht. Dabei ergibt sich bei Ausbildung des jeweiligen Sitzbereiches mit einem Leckageraum, der zwischen zwei Dichtungen ausmundet, eine neue, bislang unbekannte Anordnung, die eine bis heute bei bekannten Ventilen dieser Bauart nicht realisierbare Schaltfunktion, nämlich die gleichzeitige Schließstellung der beiden äußeren Ventilgehäuseteile gegenüber dem mittleren Gehäuse, ermöglicht und wobei zusatzlich zwischen zwei benachbarten Ventilgehäuseteilen jeweils ein Leckageraum ausgebildet ist. In Anlehnung an die Klassifizierung von Ventilen in der Pneumatik stellt dieses neue Ventil ein sogenanntes 5/3-Wegeventil dar. Ein derartiges Ventil weist 5 Anschlusse und 3 Stellungen (A, B, C) auf. Je nach Bemessung der Schließglieder kann in der mittleren Stellung A, der sogenannten Grundstellung, das mittlere Ventilgehauseteil gegenüber den äußeren Ventilgehäuseteilen entweder beiderseits geschlossen oder beiderseits offen sein. In den beiden anderen Stellun-

## EP 0 378 589 B1

gen B bzw. C ergibt sich eine Umschaltfunktion zwischen dem mittleren und dem jeweils geschalteten äußeren Ventilgehäuseteil. Der Anschluß des mittleren Ventilgehäuseteils und der äußeren Ventilgehäuseteile ist gemäß der bekannten Nomenklatur mit 1, 2 und 4 gekennzeichnet, während zwei weitere Anschlüsse die Bezeichnung 3 und 5 tragen. Aus der nachfolgenden Tabelle für ein bekanntes 5/3-Wegeventil ist ersichtlich, welchen Schaltzustand die jeweiligen Anschlüsse 1 bis 5 in den Stellungen A, B und C einnehmen. Ein geschlossener Anschluß ist mit "0", ein geöffneter Anschluß mit "1" gekennzeichnet.

**Schaltzustände eines 5/3-Wegeventils gemäß Stand der Technik**

| Anschluß | Stellung | | |
|---|---|---|---|
| | A | B | C |
| 1 | 0 | 1 | 1 |
| 2 | 0/1 | 1 | 1 |
| 3 | 0/1 | 1 | 0 |
| 4 | 0/1 | 1 | 1 |
| 5 | 0/1 | 1 | 1 |

\* / \*\*

\*  in Grundstellung A geschlossen

\*\*  in Grundstellung A offen

Aus der vorstehenden Tabelle wird ersichtlich, daß derartige Ventile entweder in Grundstellung "geschlossen" oder in Grundstellung "offen" sind (vgl. Spalte A). Darüber hinaus wird ersichtlich, welche Anschlüsse des 5/3 - Wegeventils in der Stellung B bzw. der Stellung C miteinander verbunden sind.

Bei einer Ausführungsform gemäß der Erfindung, bei der es sich, wie vorstehend bereits erläutert, hinsichtlich der Zahl der Anschlüsse und Schaltstellungen um ein 5/3-Wegeventil handelt, stellen die Anschlüsse 3 und 5 jeweils die Verbindung des Leckageraumes zum Innenraum des Ventilgehäuses dar. Die nachfolgende Tabelle zeigt die Schaltzustände des Gegenstandes gemäß der Erfindung in Anlehnung an die aus der Pneumatik bekannte Nomenklatur.

**Schaltzustände der Ventilvorrichtung gemäß der Erfindung**

| Anschluß | Stellung | | |
|---|---|---|---|
| | A | B | C |
| 1 | 0/1 | 1 | 1 |
| 2 | 0/1 | 0 | 1 |
| 3 | 0 | 0 | 0 |
| 4 | 0/1 | 1 | 0 |
| 5 | 0 | 0 | 0 |

\* / \*\*

\*  in Grundstellung A geschlossen

\*\*  in Grundstellung A offen

Aus der vorstehenden Tabelle ist ersichtlich, daß beim erfindungsgemäßen Ventil die Anschlüsse 1, 2 und 4 (Anschluß 1 für das mittlere Ventilgehäuseteil; Anschluß 2 bzw. 4: Anschluß der jeweils äußeren

3

Ventilgehäuseteile) in gleicher Weise wie beim 5/3-Wegeventil gemäß dem Stand der Technik geschaltet werden. In Stellung B ist der Anschluß 1 auf den Anschluß 4, und in Stellung C ist der Anschluß 1 auf den Anschluß 2 durchgeschaltet. Identitat zwischen den beiden Losungen ergibt sich außerdem in der Schaltstellung "in Grundstellung geschlossen". Wahrend beim 5/3-Wegeventil gemäß dem Stand der Technik in Stellung B Anschluß 2 mit Anschluß 3 und in Stellung C Anschluß 4 mit Anschluß 5 verbunden ist, bleiben bei der Ventilvorrichtung gemäß der Erfindung die Anschlüsse 3 und 5 (Verbindung des Leckageraumes zum Innenraum des Ventilgehauses) auch in diesen Stellungen stets geschlossen.

Betrachtet man die beiden Ventile in ihrer Ausfuhrung "in Grundstellung offen", so stellt man keine Ubereinstimmung fest. Wahrend hier beim Ventil gemäß dem Stand der Technik der Anschluß 1 geschlossen bleibt, und die Anschlüsse 2 und 3 bzw. 4 und 5 miteinander verbunden sind, ergibt sich beim Gegenstand gemäß der Erfindung eine Verbindung der Anschlüsse 1, 2 und 4 miteinander, während die Anschlüsse der Leckageraume 3 und 5 sich bestimmungsgemäß in Schließstellung befinden.

Aus der letztgenannten Tabelle wird ersichtlich, daß die Ventilvorrichtung gemäß einer Ausführungsform der Erfindung ein 5/3-Wegeventil darstellt, das es in dieser Auspragung und mit den vorstehend genannten Eigenschaften im Ventilbereich, insbesondere im Bereich der Nahrungs- und Getrankemittelindustrie nicht gibt. Neben der Funktion als Umschaltventil existiert eine Grundstellung, in der das Ventil entweder geschlossen oder offen ist. Daruber hinaus ist das Ventil in jedem Sitzbereich leckagegesichert.

Die erfindungsgemäß vorgeschlagene Ventilvorrichtung ermöglicht bei entsprechender Bemessung des Schließgliedes auch ein sogenanntes 5/2-Wegeventil und ergibt eine Losung, bei der auch der untere Ventilsitz leckagegesichert ist.

Es ergibt sich durch entsprechende längenmäßige Bemessung des Schließgliedes auch die Möglichkeit, die Ventilvorrichtung gemäß der Erfindung, im Gegensatz zum bekannten Ventil, zu einem echten 5/2-Wegeventil auszubilden, da ohne weiteres eine derarte Bemessung möglich ist, daß das Schließglied eine Schließstellung einerseits einnimmt, bevor es die Schließstellung andererseits aufgibt. Beim bekannten Mehrwege-Umschaltventil ist beim Schaltungsdurchgang in jedem Fall eine Zwischenstellung in Kauf zu nehmen, bei der das mittlere Ventilgehäuseteil 3 gleichzeitig mit den beiden äußeren Ventilgehäusen 2 und 4 verbunden ist.

Bei der erfindungsgemäß vorgeschlagenen Ventilvorrichtung läßt sich das Verschlußteil oder lassen sich die Verschlußteile zwischen den beiden Schließgliedern anordnen. Alternativ dazu ist auch eine Losung gegeben, bei der sich jeweils ein Verschlußteil beiderseits eines einzigen Schließgliedes befindet. Im erstgenannten Falle lassen sich sowohl die Schließglieder als auch die Verschlußteile miteinander verbinden, so daß bei uneingeschrankter Funktion der Ventilvorrichtung lediglich von außen zwei Antriebsbewegungen erforderlich sind. Im zweiten Falle ergeben sich hinsichtlich der Ausgestaltung des Antriebes einer derartigen Ventilvorrichtung die gleichen Vorteile.

Während die vorgenannte Ventilvorrichtung uneingeschränktes, leckagefreies Schalten ermöglicht, ergibt sich nach einer weiteren Ausführungsform der Ventilvorrichtung gemäß der Erfindung die Möglichkeit, das Ventil mit nur einer einzigen Antriebsbewegung zu schalten, allerdings unter Verzicht auf das leckagefreie Schalten, d. h. bei Hinnahme einer begrenzten Schaltleckage. Dies gelingt dadurch, daß die Verschlußteile mit dem Schließglied in einem Abstand fest verbunden sind.

Eine weitere Ausführungsform der Ventilvorrichtung gemäß der Erfindung schlagt bei innenseits zwischen den Schließgliedern angeordneten Verschlußteilen deren Zusammenfassung zu einer Verschlußteileinheit vor, wobei letztere relativ beweglich zu dem Schließglied über eine Stange verschoben wird, deren Durchfuhrungsstelle durch das Schließglied in einfacher Weise und unter gunstigen Bedingungen durch einen Faltenbalg stoffschlussig überbruckt werden kann.

Eine andere Weiterbildung der Ventilvorrichtung gemäß der Erfindung sieht vor, daß das Schließglied in seiner axialen Erstreckung durch teleskopartig arbeitende Vorkehrungen verändert wird, wobei der Abstand der Schließglieder durch ein elastisches Verbindungselement stoffschlussig überbruckt wird. Durch diese Maßnahme wird es möglich, die Ventilvorrichtung mit einer ambivalenten Grundstellung auszustatten, nämlich der Grundstellung "geschlossen" oder der Grundstellung "offen". Die größte axiale Erstreckung des Schließgliedes ist in der Grundstellung des Ventils so zu bemessen, daß das Schließglied beide Sitzbereiche unter Einbeziehung jeweils des gesamten Leckageraumes uberdeckt.

In seiner kurzesten axialen Ausbildung ist die Ventilvorrichtung in ihrer Grundstellung vom mittleren Ventilgehauseteil aus beiderseits offen.

Ein weiterer, nicht unwesentlicher Vorteil ergibt sich bei der Anwendung der erfindungsgemäßen Ventilvorrichtung dann, wenn beispielsweise ein Tankauslauf am mittleren Gehäuseteil angeschlossen wird und die äußeren Ventilgehauseteile mit Leitungen verbunden sind. Wahrend bei herkommlichen Anordnungen von Mehrwege-Umschaltventilen alle Bereiche der mit Produkt in Beruhrung kommenden Mehrwege-Umschaltventilanordnung nur dann erfaßt wurden, wenn entweder beide Leitungen oder wenigstens die entferntere Leitung vom Tank aus mit Reinigungsmittel beaufschlagt wurde, so werden alle Bereiche der erfindungsgemäß vorgeschlagenen Ventilvorrichtung bereits bei einer Reinigung einer der beiden Leitungen vom Tank aus erfaßt.

Ausführungsbeispiele der Erfindung sind in der Zeichnung dargestellt und werden im folgenden naher beschrieben.

Es zeigen:

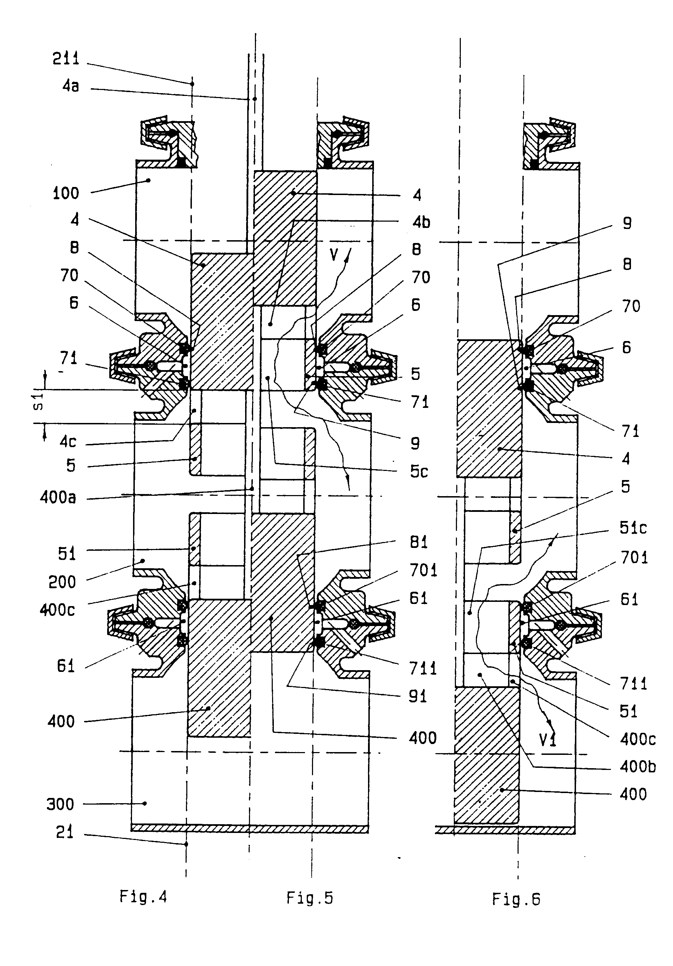

Figuren 1 bis 3
in vereinfachter schematischer Darstellung einen Mittelschnitt durch eine Ventilvorrichtung gemäß der Erfindung in den drei moglichen Schaltstellungen (Figur 1: in Grundstellung A geschlossen; Figur 2 und Figur 3: die zwei anderen Offenstellungen B. C), wobei ein einziges Verschlußteil innenseits der beiden Schließglieder angeordnet ist;
Figuren 4 bis 6
einen Mittelschnitt durch eine andere Ausführungsform der Ventilvorrichtung gemäß der Erfindung, ebenfalls in den drei möglichen Schaltzuständen, wobei zwei Verschlußteile innenseits der beiden Schließglieder angeordnet sind und eine feste Verbindung aller Verschlußteile und Schließglieder miteinander vorgesehen ist;
Figuren 7 bis 9
einen Mittelschnitt durch eine weitere vorteilhafte Ausführungsform der Ventilvorrichtung gemäß der Erfindung in den drei möglichen Schaltzuständen, wobei die Verschlußteile und Schließglieder hinsichtlich ihrer Anzahl und Anordnung der Ausführungsform gemäß den Figuren 4 bis 6 entsprechen, jedoch eine relative Beweglichkeit zwischen Schließgliedern und Verschlußteilen gegeben ist;
Figuren 10 bis 12
einen weiteren Mittelschnitt durch eine Ausführungsform der Ventilvorrichtung gemäß der Erfindung in den drei Schaltzustanden, wobei die Verschlußteile beiderseits eines einzigen Schließgliedes angeordnet und mit letzterem fest verbunden sind;
Figuren 13 bis 15
einen Mittelschnitt durch eine weitere vorteilhafte Ausführungsform der Ventilvorrichtung gemäß der Erfindung in den drei Schaltzustanden, wie sie sich aus den Figuren 10 bis 12 ergibt, wobei eine relative Beweglichkeit der Verschlußteile gebenuber dem Schließglied vorgesehen ist;
Figur 16 und Figur 17
in wesentlich vereinfachter, schematischer Darstellung einen Mittelschnitt durch eine andere Ausführungsform der Vorrichtung gemäß der Erfindung in ihrer Grundstellung, wobei die axiale Erstreckung des Schließgliedes teleskopartig veranderbar ist (Figur 16: außenseits der Verschlußteile angeordnete Schließglieder; Figur 17: innenseits der Verschlußteile angeordnetes Schließglied).

Liste der Bezeichnungen

| | |
|---|---|
| 100, 200, 300 | Ventilgehäuseteile |
| 2a/2a1 | Ablauföffnung |
| 3 | Gehäuseverschlußteil |
| 4/400/401 | Schließglied |
| 4a/400a | Stange |
| 4b/400a | Öffnungen |
| 4c/400c | Verbindungsstege |
| 402 | erstes Schließgliedteil |
| 403 | zweites Schließgliedteil |
| 404 | erste Teleskopstange |
| 405 | zweite Teleskopstange |
| 406 | erstes elastisches Verbindungselement |
| 408 | erste Führungsbohrung |
| 409 | zweite Führungsbohrung |
| 5/51 | Verschlußteil |
| 501/500 | Verschlußteileinheit |
| 5a | Stange |
| 5b/51b | Stege |
| 5c/51c | Durchtrittsoffnung |

| 52 | erstes Verbindungsteil |
| 53 | zweites Verbindungsteil |
| 54 | zweite Durchtrittsoffnung |
| 6/61 | Leckageraum |
| 70/701 | erste Dichtung |
| 71/711 | zweite Dichtung |
| 8/81 | erste Abdichtungsstelle |
| 9/91 | zweite Abdichtungsstelle |
| 12 | Gehausedichtung |
| 13 | Verbindungsmittel |
| 15/151 | Anschlußoffnung |
| 16/161 | Kanal |
| 18/181 | Sammelkanal |
| 21/211 | erster Ausgleichskolben |
| 26/261 | erster Faltenbalg |
| 34 | Faltenbalg |
| I/I1 | Eintritt der Reinigungsflüssigkeit |
| II/II1 | Austritt der Reinigungsflüssigkeit/Leckage |
| V/V1 | Durchtritts- oder Rohrströmung |

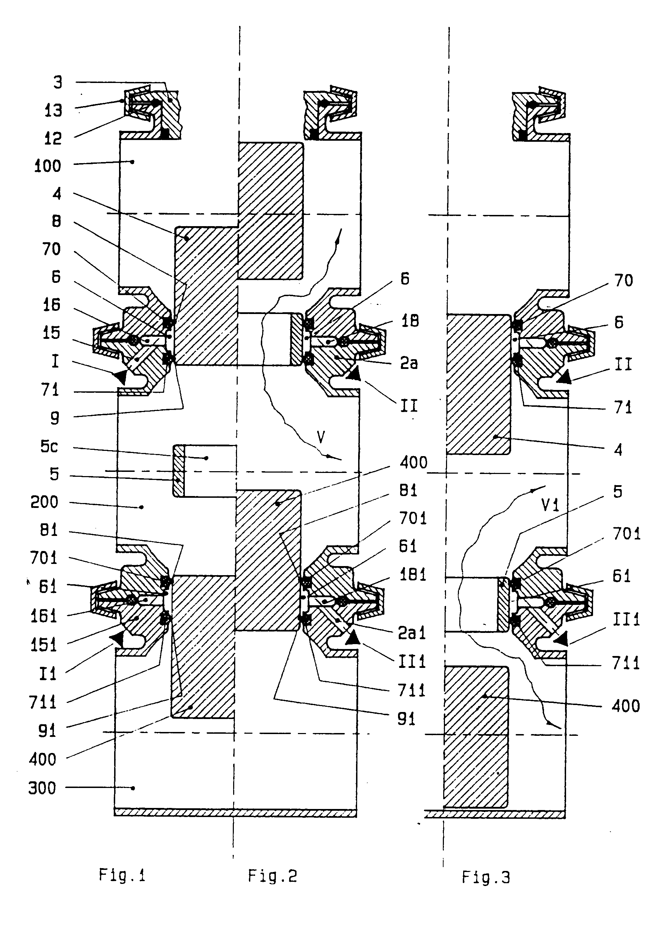

Figur 1 zeigt eine Ventilvorrichtung mit einem zwischen den beiden Schließgliedern 4 bzw. 400 innenseits angeordneten Verschlußteil 5. Die Ventilvorrichtung mit den drei Gehauseteilen 100, 200 und 300 befindet sich in ihrer Grundstellung A, in der sie vom mittleren Ventilgehäuseteil 200 aus beiderseits geschlossen ist.

In den Figuren 2 und 3 sind die beiden Offenstellungen B bzw. C der Ventilvorrichtungen dargestellt, wobei sich in Figur 2 das obere Schließglied in seiner Offenstellung befindet und das Verschlußteil 5 dessen in der Schließstellung eingenommene Lage gegenüber den Dichtungen 70 und 71 substituiert. Das untenliegende Schließglied 400 ist so bemessen, daß es in der gezeigten Schaltstellung den untenliegenden Sitzbereich mit den Dichtungen 701 und 711 noch nicht verlassen hat.

In Figur 3 befindet sich das untenliegende Schließglied 400 in seiner Offenstellung, das einzige Verschlußteil 5 hat die Lage des Schließgliedes in dessen Schließstellung gegenüber den Dichtungen 701 und 711 substituiert. Dabei ist das obenliegende Schließglied 4, in gleicher Weise wie das untenliegende, derart bemessen, daß die Ventilgehäuseteile 100 und 200 noch gegeneinander verschlossen sind. In jedem Falle sind die Dichtungen 70 und 71 bzw. 701 und 711 entweder von dem Schließglied 4 bzw. 400 oder von dem Verschlußteil 5 berandet. Zwischen den Dichtungen 70 und 71 befindet sich der Leckageraum 6 und zwischen den Dichtungen 701 und 711 der Leckageraum 61. Durch die Art der Schraffur ist in den Figuren 1 bis 3 angedeutet, daß die Schließglieder 4 und 400 in jedem der gezeigten Schaltzustande gleichen Abstand voneinander haben, so daß eine Verbindung beider und eine Betatigung über eine einzige von außerhalb der Ventilvorrichtung herangefuhrte, nicht dargestellte Stange möglich ist. Das Verschlußteil 5 erfordert einen eigenen Antrieb, dessen erforderlicher Schalthub kleiner ist als jener für die Schließglieder. Das verschlußteil 5 mit seiner Durchtrittsöffnung 5c erlaubt den vorstehend "Innendurchgang" genannten Durchtritt der Stromung V vom mittleren Gehäuseteil 200 zum oberen Gehäuseteil 100 oder umgekehrt.

In der in Figur 3 dargestellten Lage des Verschlußteils 5 ist die entsprechende Durchtrittsströmung über die Durchtrittsöffnung 5c mit V1 gekennzeichnet. Aufbau und Funktion der übrigen Bauteile im Bereich der Ventilgehäuseteile 100 und 200 sind aus der Patentanmeldung DE-A-37 01 027.1 und aus der die Priorität dieser Patentanmeldung beanspruchenden WO-A-88/05512 bekannt. Dies betrifft insbesondere ein Gehäuseverschlußteil 3, eine Gehäusedichtung 12 und ein Verbindungsmittel 13, eine erste und eine zweite Abdichtungsstelle 8 bzw. 9, eine Anschlußöffnung 15, einen Kanal 16 und einen Sammelkanal 18, eine Ablauföffnung 2a, aus der die mit II bezeichnete Reinigungsflüssigkeit oder die Leckage austritt. Der Eintritt der Reinigungsflüssigkeit über die Anschlußöffnung 15 ist mit I bezeichnet.

Der zwischen den Ventilgehäuseteilen 200 und 300 vorgesehene Sitzbereich ist völlig identisch zu jenem zwischen dem Ventilgehäuseteil 100 und 200 ausgebildet. Teile in diesem Sitzbereich wurden, im Unterschied zu gleichen Teilen im oberen Sitzbereich, hinsichtlich ihrer Kennung durch Anfügen der Ziffer 1 an die aus den vorgenannten Patentanmeldungen (DE-A-37 01 027.1; WO-A-88/05512) bekannten Bezeichnungen definiert. Eine Beschreibung der bekannten Anordnung im unteren Bereich der Ventilvorrichtung erübrigt sich daher.

Gleichwohl stellt die in den Figuren 1 bis 3 dargestellte Ventilvorrichtung nicht einfach eine Addition von zwei an sich aus den vorgenannten Patentanmeldungen bekannten Ventilen dar. Abgesehen davon, daß

6

allein die Kombination der beiden an sich bekannten Ventile eine, wie vorstehend bereits erläutert, völlig neue Ventilvorrichtung ausbildet, besteht der wesentliche Unterschied gegenüber der bloßen Kombination darin, daß ein einziges Verschlußteil 5 und miteinander gekoppelte Schließglieder 4 und 400 vorgesehen sind, wodurch die komplexe Ventilvorrichtung mit lediglich zwei voneinander verschiedenen Antriebsbewegungen, die über nicht gezeigte Mittel erzeugt werden, auskommt.

In den Figuren 4 bis 6 ist eine andere Ausführungsform der Ventilvorrichtung gemäß der Erfindung in den drei möglichen Schaltzustanden, wobei letztere jenen der Figuren 1 bis 3 entsprechen, dargestellt. Die Ventilgehäuseteile 100, 200 und 300 und die zugeordneten Bauteile sind identisch mit jenen gemäß der Figuren 1 bis 3. Auf eine vollständige Bezeichnung wurde daher in diesen und den nachfolgenden Figuren verzichtet. Die Teile 4 und 400, 6 und 61, 8 und 81, 9 und 91, 70 und 701, 71 und 711 sind zwar noch im einzelnen gekennzeichnet, brauchen jedoch, da sie bei der Beschreibung der Figuren 1 bis 3 bereits erläutert wurden, nicht noch einmal hinsichtlich ihrer Bedeutung erwähnt werden. Im Unterschied zur Ausfuhrung gemaß den Figuren 1 bis 3 ist bei der Ausführung gemäß den Figuren 4 bis 6 neben dem Verschlußteil 5 noch ein zweites Verschlußteil 51 vorgesehen. Das Verschlußteil 5 ist beispielhaft über einen Verbindungssteg 4c und das Verschlußteil 51 mit einem Verbindungssteg 400c mit dem jeweils zugeordneten Schließglied 4 bzw. 400 in einem Abstand s1 fest verbunden. Da das obere Schließglied 4 mit dem unteren Schließglied 400 wiederum über eine Stange 400a fest verbunden ist, kann die dargestellte Ventilvorrichtung uber eine einzige Antriebsbewegung, die uber nicht gezeigte Mittel erzeugt wird geschaltet werden. Die Schaltbewegung von der Schließin die jeweilige Offenstellung erfolgt allerdings nicht leckagefrei, da zwischen dem Verschlußteil und dem Schließglied 5, 51 bzw. 4, 400 der vorstehend erwähnte Abstand s1 vorgesehen ist. Die Verbindungsstege 4c bzw. 400c haben neben ihrer Verbindungsfunktion die Aufgabe, bei der Schaltbewegung von der Schließ- in die Offenstellung oder umgekehrt die jeweils zugeordneten Dichtungen 70, 71 bzw. 701, 711 in ihrer notwendigen Lage zu fixieren. In der in Figur 5 dargestellten Offenstellung gelangt die mit V bezeichnete Durchtrittsstromung vom Ventilgehauseteil 200 uber die Durchtrittsoffnung 5c und die Offnungen 4b in das obere Ventilgehauseteil 100. In der in Figur 6 dargestellten anderen Offenstellung gelangt die dort mit V1 bezeichnete Durchtrittsströmung in entsprechender Weise uber eine Durchtrittsoffnung 51c und Offnungen 400 b, die zwischen den Verbindungsstegen 400 c gebildet werden, vom mittleren Ventilgehauseteil 200 in das untere Ventilgehauseteil 300 oder umgekehrt. Die strichpunktierten Linien 21 und 211 kennzeichnen mögliche Ausgleichskolben, mit denen die Ventilvorrichtung versehen werden kann und die für einen völligen Druckausgleich am Schließglied 4, 400 sorgen.

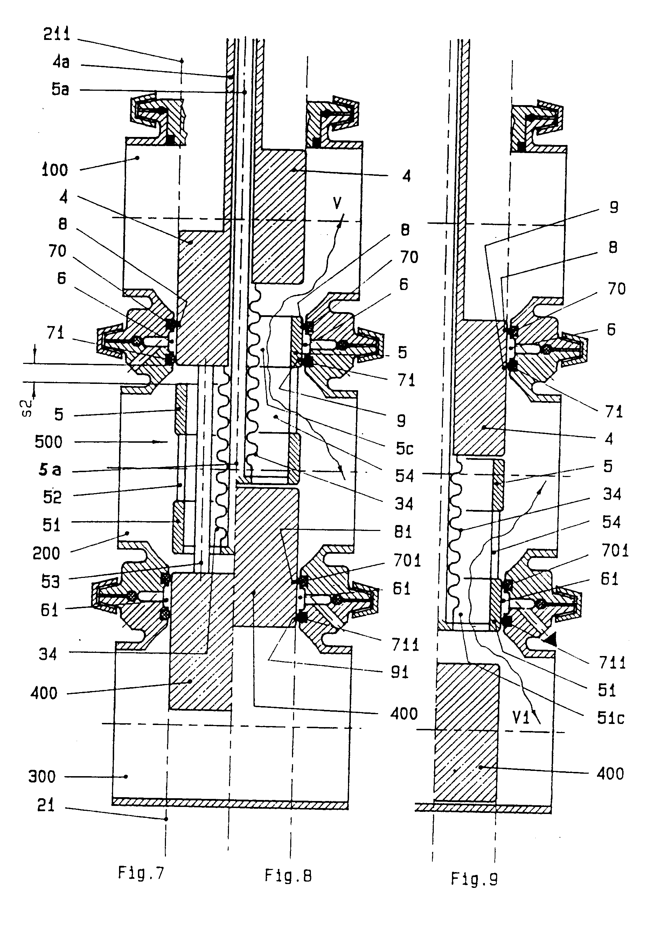

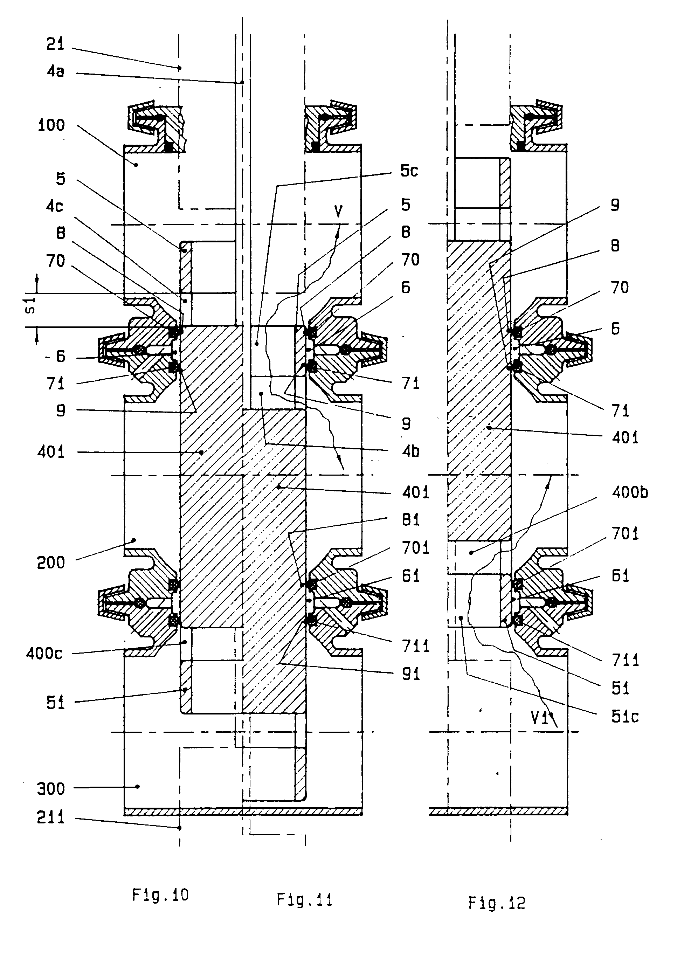

Soweit bei der Ausführungsform gemäß den Figuren 7 bis 9 gleiche Bezeichnungen wie bei der Ausführungsform gemäß den Figuren 4 bis 6 vorliegen, sind die gleichermaßen gekennzeichneten Bauteile in Aufbau und Funktion auch völlig identisch. Daher wird in der nachfolgenden Figurenbeschreibung auch nur auf die Unterschiede in den Ausführungsformen hingewiesen. Die beiden Schließglieder 4 und 400 sind über wenigstens ein exentrisch angeordnetes zweites Verbindungsteil 53 miteinander verbunden. Der Antrieb des obenliegenden Schließgliedes 4, und damit auch des untenliegenden Schließgliedes 400, erfolgt über eine als Hohlstange ausgebildete Stange 4a. In dieser Hohlstange ist eine Stange 5a geführt, die mit einer Verschlußteileinheit 500 verbunden ist. Die Verschlußteileinheit 500 besteht aus den beiden Verschlußteilen 5 und 51, die wiederum über ein erstes Verbindungsteil 52 fest miteinander verbunden sind. Die Verschlußteileinheit 500 ist relativ beweglich zu den Schließgliedern 4, 400 angeordnet und kann insgesamt um einen zweifachen Abstand s2 verschoben werden. Dieser zweifache Abstand s2 ergibt näherungsweise einen dem Nennquerschnitt der Ventilvorrichtung entsprechenden Offnungsquerschnitt, wobei letzterer jeweils in den Offenstellungen des Ventils zwischen dem Verschlußteil 5 bzw. 51 und dem jeweils zugeordneten Schließglied 4 bzw. 400 ausgebildet wird. Ein zwischen der Stange 5a und dem Schließglied 4 gebildeter, nicht naher bezeichneter Durchdringungsspalt wird über einen Faltenbalg 34 stoffschlussig überbruckt. Neben den für die vorstehend bereits genannte Durchtrittsstromung V bzw. V1 in den Verschlußteilen 5 bzw. 51 vorgesehenen Durchtrittsöffnungen 5c bzw. 51c sind zwischen den ersten Verbindungsteilen 52 zweite Durchtrittsöffnungen 54 vorgesehen, über die die vorstehend genannten Durchtrittsstromungen V und V1 aus der Verschlußteileinheit 500 in das sie umgebende Ventilgehäuseteil 200 oder umgekehrt jeweils hindurchtreten können. Die dargestellte Ausfuhrungsform realisiert vollständig leckagefreie Schaltungsvorgänge der Ventilvorrichtung. Es sind dazu zwei voneinander unabhängige Antriebsbewegungen der Stangen 4a bzw. 5a erforderlich, die über nicht gezeigte Mittel angesteuert sind.

Die Figuren 10 bis 12 zeigen eine weitere Ausführungsform der Ventilvorrichtung gemäß der Erfindung. Es wird im nachfolgenden nur auf die Unterschiede gegenüber den vorangegangenen Figuren, insbesondere gegenüber den Figuren 4 bis 6, hingewiesen. Ebenso wie bei der Ausfuhrungsform gemäß den Figuren 4 bis 6 befinden sich die Verschlußteile 5 und 51 in fester Verbindung gegenüber dem Schließglied 401, das in einem einzigen Bauteil zusammengefaßt ist und nunmehr außenseits die Verschlußteile 5 uber den Verbindungssteg 4c und das Verschlußteil 51 über den Verbindungssteg 400c trägt. Der Abstand zwischen dem Verschlußteil 5 bzw. 51 und dem Schließglied 401 beträgt wiederum s1. Der übrige Aufbau der Ventilvorrichtung und seine Wirkungsweise ist im übrigen völlig identisch mit jener gemäß den Figuren 4 bis 6. Eine weitere Beschreibung und Erlauterung erübrigt sich daher.

Die Ausfuhrungsform gemäß den Figuren 13 bis 15 erklärt sich hinsichtlich ihres grundsätzliche Aufbaues durch den unmittelbaren Vergleich mit der Ausfuhrungsform gemäß den Figuren 10 bis 12 und hinsichtlich der Funktion und Arbeitsweise ihrer Verschlußteile 5 und 51 uber den Vergleich mit der Ausführungsform gemäß den Figuren 7 bis 9. Das einzige Schließglied 401 wird nunmehr über wenigstens eine exzentrisch angeordnete Stange 4a angetrieben. Die Verschlußteile 5 und 51 sind über eine Stange 5a miteinander verbunden, die über nicht gezeigte Mittel angesteuert wird. Jedes Verschlußteil 5 bzw. 51 ist uber einen Steg 5b bzw. 51b mit dieser Stange verbunden. Die Verschlußteile 5 und 51, die Stange 5a und die Stege 5b und 51b bilden zusammen eine Verschlußteileinheit 501, die relativ beweglich gegenüber dem Schließglied 401 verschoben wird.

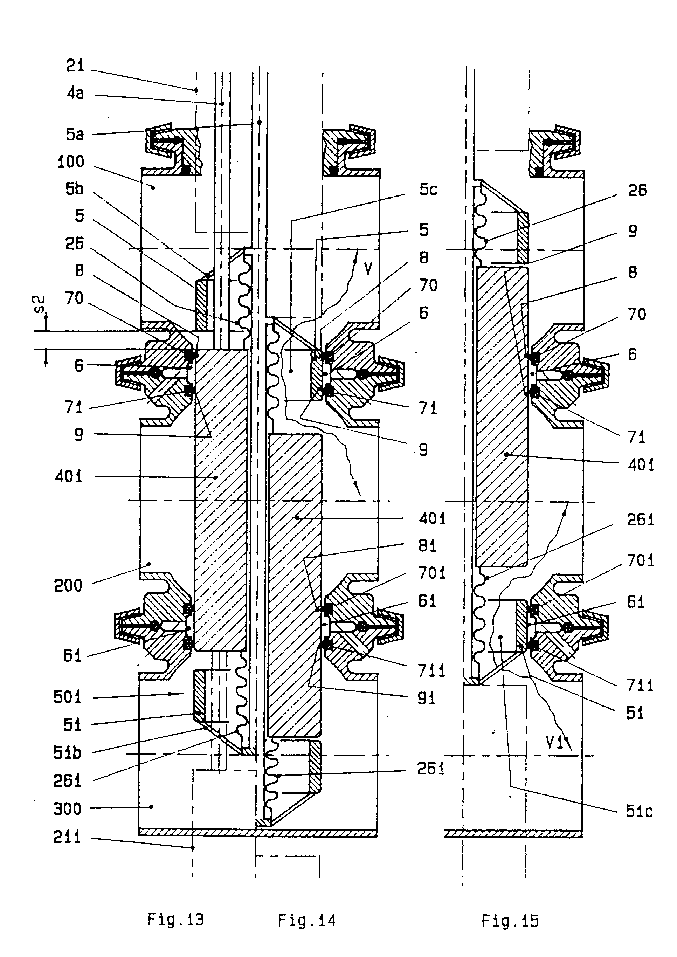

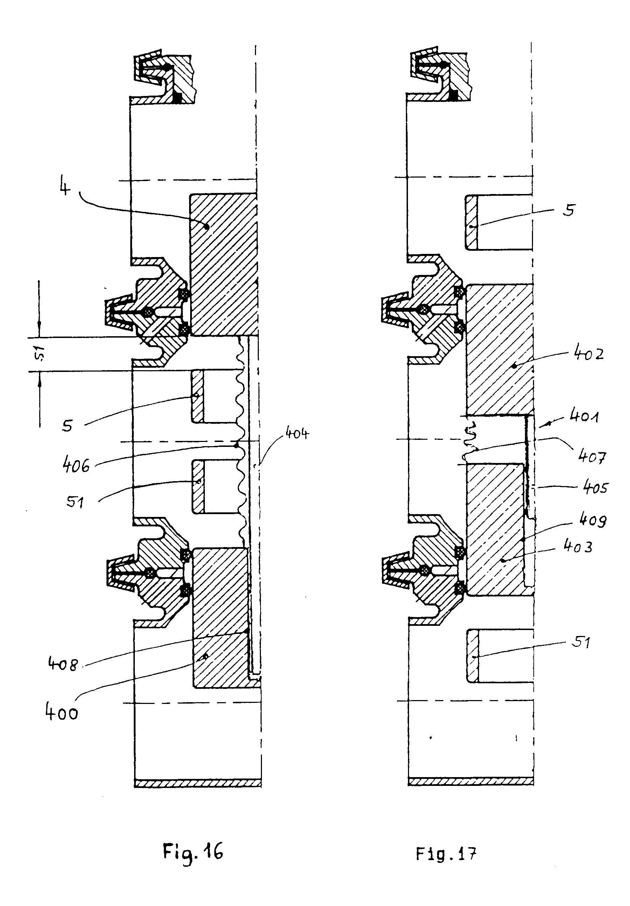

Von der einen Offenstellung in die andere Offenstellung der Ventilvorrichtung betragt der erforderliche Verschiebeweg insgesamt einen zweifachen Abstand s2, wobei dieser in der Offenstellung näherungsweise einen dem Nennquerschnitt der Ventilvorrichtung entsprechenden Offnungsquerschnitt bildet. Eine nicht naher bezeichnete obere und untere Durchdringungsstelle zwischen der Stange 5a und dem Schließglied 401 wird jeweils über einen Faltenbalg 26 bzw. 261 stoffschlüssig überbrückt. Diese Faltenbälge 26, 261 besitzen in der Grundstellung der Ventilvorrichtung (Figur 13) ihre spannungsfreie Einbaulage, während sie in den Offenstellungen der Ventilvorrichtung wechselweise gestreckt (26 in Figur 14 und 261 in Figur 15) bzw. gestaucht (261 in Figur 14 und 26 in Figur 15) sind.

Die in den Figuren 1 bis 15 gezeigte Ventilvorrichtung kann mit Hilfe der aus den vorstehend genannten Patentanmeldungen DE-A-3701027.1 und WO-A-88/05512 bekannten Merkmale für Dichtungen, Leckagehohlräume, Verschlußteile und Schließglieder sowie zugehörige Steuerteile realisiert werden.

In den Figuren 16 und 17 ist eine Ausführungsform der Ventilvorrichtung gezeigt, in der das Schließglied 4, 400 (Figur 16) bzw. das Schließglied 401 (Figur 17) in seiner axialen Erstreckung durch teleskopartig arbeitende Vorkehrungen 404, 408 bzw. 405, 409 verandert wird. Mit 404 ist eine Teleskopstange und mit 408 eine erste Führungsbohrung gezeichnet. In Figur 17 tragen diese Bauteile die Bezeichnung 405 und 409. Der Abstand der Schließglieder 4 und 400 (Figur 16) bzw. des ersten und des zweiten Schließgliedteiles 402 und 403 (Figur 17) wird durch ein elastisches Verbindungselement 406 bzw. 407 stoffschlüssig überbrückt.

Durch diese beiden Ausfuhrungsformen ist es möglich, die jeweilige Ventilvorrichtung in ihrer Grundstellung ambivalent hinsichtlich des Schaltzustandes der beiden äußeren Ventilgehauseteile gegenüber dem mittleren Ventilgehauseteil auszustatten. Bei kurzem Abstand der Schließglieder 4, 400 bzw. 402, 403 voneinander ist die Ventilvorrichtung in ihrer Grundstellung geschlossen, bei größtmöglichem Abstand ist sie in der Grundstellung offen.

**Patentansprüche**

1. Ventilvorrichtung zur Durchflußsteuerung eines Mediums, mit wenigstens einem Leckageraum (6,61) und aufweisend: drei Ventilgehäuseteile (100,200,300) in Reihenanordnung mit zugeordneten Zu- und Abläufen, wobei:

   zwischen dem mittleren Ventilgehäuseteil (200) und wenigstens einem der beiden äußeren Ventilgehäuseteile (100,300) eine Dichtungsanordnung (70,701;71,711) aus zwei in Serie angeordneten Abdichtungsstellen vorgesehen ist;

   zwischen dem mittleren ventilgehäuseteil (200) und dem anderen der beiden äußeren ventilgehäuseteile (100,300) ebenfalls eine Dichtungsanordnung (70,711;71,711) vorgesehen ist;

   der Leckageraum (6,61) zwischen den zugehörigen Abdichtungsstellen (70,701;71,711) vorhanden und mit der Umgebung des Ventils verbunden ist und sowohl in der Schließ- als auch in der Offenstellung des Ventils von den Innenräumen der Ventilgehäuseteile (100,200,300) abgesperrt ist;

   **dadurch gekennzeichnet**,

   daß den beiden Dichtungsanordnungen (70,701;71,711) wenigstens ein Schließglied (4,400,401) und wenigstens ein Verschlußteil (5,51) mit Innendurchgang (5c) zugeordnet ist, wobei das Schließglied (4,400,401) schieberartig ausgebildet und translatorisch oder rotativ verschiebbar ist und das Verschlußteil (5,51) in Richtung des Bewegungsfreiheitsgrades des Schließgliedes (4,400,401) verschiebbar ist;

   daß die beiden Dichtungsanordnungen (70,701;71,711) durch gehäuseseitig angeordnete mit dem Schließglied (4,400,401) oder dem Verschlußteil (5,51) zusammenwirkende Dichtelemente gebildet sind; und

daß eine Stellung von Schließglied (4,400,401) und Verschlußteil (5,51) vorgesehen ist, in der der Durchfluß vom mittleren Ventilgehäuseteil (200) aus entweder beiderseits (5/3-Wegeventil) bzw. einerseits offen (5/2-Wegeventil) oder beiderseits gesperrt (5/3-Wegeventil) ist, und daß in den von dieser Stellung abweichenden Stellungen an der jeweils umgeschalteten Dichtungsanordnung (70,701;71,711) eine Substitution des Schließgliedes (4,400,401) bzw. Verschlußteiles (5,51) durch das jeweils andere erfolgt.

2. Ventilvorrichtung nach Anspruch 1 dadurch gekennzeichnet,
daß zwischen dem mittleren Ventilgehäuseteil (200) und dem anderen der beiden äußeren Ventilgehäuseteile (100,300) ebenfalls eine Dichtungsanordnung (70,701;71,711) aus zwei in Serie angeordneten Abdichtungsstellen vorgesehen ist.

3. Ventilvorrichtung nach Anspruch 2, dadurch gekennzeichnet,
daß zwischen beiden dichtungsanordnungen der jeweils benachbarten Ventilgehauseteile (100, 200 und 200, 300) ein Leckageraum (6 bzw. 61) ausgebildet ist (Fig. 1 bis 17).

4. Ventilvorrichtung nach Anspruch 3, dadurch gekennzeichnet,
daß in Schließstellung des Ventils die Leckageraume (6,61) und/oder Abdichtungsstellen durch jeweils ein Schließglied (4,400) und daß in den beiden anderen Stellungen des Ventils die Leckageraume (6, 61) und/oder Abdichtungsstellen durch einen Verschlußteil (5, 51 oder 500) mit Innendurchgang von den Innenraumen der Ventilgehäuseteile (100, 200; 200, 300) abgesperrt sind (Fig. 1 bis 9 und Fig. 16).

5. Ventilvorrichtung nach Anspruch 3, dadurch gekennzeichnet,
daß in Schließstellung des Ventils die Leckageräume (6, 61) und/oder Abdichtungsstellen durch ein Schließglied (401) und daß in den beiden anderen Stellungen des Ventils die Leckageräume (6, 61) durch jeweils ein Verschlußteil (5,51 oder 501) mit jeweils einem Innendurchgang von den Innenräumen der Ventilgehauseteile (100, 200; 200, 300) abgesperrt sind. (Figur 10 bis 15 und Fig. 17).

6. Ventilvorrichtung nach Anspruch 4, dadurch gekennezeichnet,
daß die Schließglieder (4, 400) über eine Stange (400a 53) fest miteinander verbunden sind (Fig. 4 bis 9).

7. Ventilvorrichtung nach einem der Anspruche 4 bis 6, dadurch gekennzeichnet,
daß die Verschlußteile (5 und 51) mit dem Schließglied (4, 400; 401) in einem Abstand (s1) fest verbunden sind (Fig. 4 bis 6, Fig. 10 bis 12).

8. Ventilvorrichtung nach Anspruch 7, dadurch gekennzeichnet,
daß der Abstand (s1) näherungsweise einen dem Nennquerschnitte der Ventilvorrichtung entsprechenden Offnungsquerschnitt ergibt.

9. Ventilvorrichtung nach einem der Anspruche 4 bis 6, dadurch gekennzeichnet,
daß die Verschlußteile (5 und 51) zu einer Verschlußteileinheit (509 bzw. 501) zusammengefaßt sind, wobei letztere relativ beweglich zu dem Schließglied (4, 400, 401) über eine Stange (4a) insgesamt um einen zweifachen Abstand (s2) verschoben wird (Fig. 7 bis 9 und Fig. 13 bis 15).

10. Ventilvorrichtung nach Anspruch 9, dadurch gekennzeichnet,
daß der zweifache Abstand (s2) näherungsweise einen dem Nennquerschnitt der Ventilvorrichtung entsprechenden Öffnungsquerschnitt ergibt.

11. Ventilvorrichtung nach einem der Anspruche 4 bis 10, dadurch gekennzeichnet,
daß das Schließglied (4, 400; 401) in seiner axialenen Erstreckung durch eine teleskopartig arbeitende Vorkehrung (404, 408; 405, 409) veranderbar ist, wobei der Abstand der Schließglieder (4, 400; 402, 403) durch ein elastisches Verbindungselement (406; 407) stoffschlussig überbrückt ist (Fig. 16 und 17).

**Claims**

1. A valve device for controlling the flow of a medium, with at least one leakinge cavity and comprising: three valve casing parts arranged in series with assigned drain inlets and drain outlets, wherein: between the middle valve casing part and at least one of the two end valve casing parts, a sealing arrangement comprising two sealing places disposed in series is foreseen; between the middle valve casing part and the other one of the two end valve casing parts also a sealing arrangement is foreseen; the leakage cavity between the accompanying sealing places is existing and connected with the environment of the valve, and is isolated from the inner spaces of the valve casing parts as well in the opened position as in the closed position of the valve; wherein at least one closing member and at least one shutter member with inner passage is assigned to the two sealing arrangements, with the closing member being formed as a slide and being either translatorily or rotarily slidable and the shutter member being movable in the direction of the degree of freedom of motion of the closing means; the two sealing arrangements are formed by sealing elements on the side of the casing interacting with the closing member or the shutter member; and that a position of closing member and shutter member is foreseen in which flow from the middle valve casing part is either open on both sides (5/3-way valve) or open on one side (5/2-way valve) or closed on both sides (5/3-way valve) and that in positions deviating from this position at each switched sealing arrangement, a substitution of the closing member or locking element by respectively the other one takes place.

2. The valve device of claim 1, wherein between the middle valve casing part and the other one of the two end valve casing parts also a sealing arrangement comprising two sealing places disposed in series is foreseen.

3. The valve device of claim 2, wherein between the two sealing arrangements of the respectively adjacent valve casing parts (100, 200 and 200, 300), a leakage cavity (6 and 61 respectively) is formed (Figs. 1 to 17).

4. The valve device of claim 3, wherein the leakage cavities (6, 61) and/or sealing places are isolated each by a closing member (4, 400) in the closed position of the valve and that in the other two positions of the valve the leakage cavities (6, 61) and/or sealing places are isolated by a shutter member (5, 51 or 500) with inner passage from the inner spaces of the valve casing parts (100, 200; 200, 300) (Figs. 1 to 9 and Fig. 16).

5. The valve device of claim 3, wherein the leakage cavities (6, 61) and/or sealing places are isolated by a closing member (401) in the closed position of the valve and in the other two positions of the valve, the leakage cavities (6, 61) are isolated each by a shutter member (5, 51 or 501) with each an inner passage from the inner spaces of the valve casing parts (100, 200; 200, 300) (Figs. 10 to 15 and Fig. 17).

6. The valve device of claim 4, wherein the closing members (4, 400) are firmly connected via a bar (400a, 53) (Figs. 4 to 9).

7. The valve device of one of the claims 4 to 6, wherein the shutter members (5 and 51) are firmly connected with the closing member (4, 400; 401) with a distance (s1) (Figs. 4 to 6, Figs. 10 to 12).

8. The valve device of claim 7, wherein the aperture cross section of the distance (s1) is approximately corresponding to the nominal cross section of the valve device.

9. The valve device of one of the claims 4 to 6, wherein the shutter elements (5 and 51) define a shutter element unit (500 or 401 respectively), wherein the shutter element unit is being slided via a bar (4a) for a total of the two-fold distance (s2) relatively movable to the closing member (4, 400; 401) (Figs. 7 to 9 and Figs. 13 to 15).

**10.** The valve device of claim 9, wherein

the aperture cross section of the two-fold distance (s2) is approximately corresponding to the nominal cross section of the valve device.

**11.** The valve device of one of the claims 4 to 10, wherein

the closing member (4, 400; 401) in its axial extension is variable by an arrangement operating like a telescope (404, 408; 405, 409), with the distance between the closing members (4, 400; 402, 403) being bridged material closed by a flexible connection element (406; 407) (Figs. 16 and 17).

**Revendications**

**1.** Dispositif de soupape pour commander le passage d'un fluide, comportant au moins un canal de fuite et présentant:

trois pièces de carter de soupape disposées en série, comportant une arrivée et un départ,
dispositif dans lequel :
- entre la pièce centrale et au moins l'une des deux pièces externes du carter de la soupape, il est prévu un ensemble d'étanchéité formé de deux points d'étanchéité disposés en série;
- entre la pièce centrale et l'autre des deux pièces externes du carter de la soupape, il est, de même, prévu un ensemble d'étanchéité;
- le canal de fuite est situé entre les points d'étanchéité correspondants et est relié à l'environnement de la soupape, et, aussi bien en position de fermeture qu'en position d'ouverture de la soupape, il est isolé de l'enceinte intérieure des pièces du carter de soupape;
caractérisé en ce que
- aux deux ensembles d'étanchéité, sont associés un organe de fermeture et au moins une pièce d'obturation comportant un passage intérieur, étant entendu que l'organe de fermeture est réalisé sous la forme d'un tiroir et peut coulisser en translation ou en rotation, et que la pièce d'obturation peut coulisser dans la direction du degré de liberté du mouvement de l'organe de fermeture;
- en ce que les deux ensembles d'étanchéité sont formés par des organes d'étanchéité disposés du côté du carter ou coopérant avec l'organe de fermeture ou avec la pièce d'obturation;
- en ce qu'il est prévu une position de l'organe de fermeture et de la pièce d'obturation, dans laquelle le passage, soit est ouvert respectivement en allant de la pièce centrale vers les deux côtés (soupape à 5/3 voies) ou vers un seul côté (soupape à 5/2 voies), soit est fermé des deux côtés,
et en ce que, dans les positions qui s'écartent de cette position, sur chaque ensemble d'étanchéité, l'organe de fermeture, ou la pièce d'obturation se substitue respectivement chaque fois à l'autre.

**2.** Dispositif de soupape suivant la revendication 1, caractérisé en ce qu'entre la pièce centrale et l'autre des deux pièces exterieures du carter de la soupape, il est, de même, prévu un ensemble d'étanchéité composé de deux points d'étanchéité disposés en série.

**3.** Dispositif de soupape suivant la revendication 2, caractérisé en ce qu'entre les deux ensembles d'étanchéité de chacune des deux pièces voisines (100, 200 et 200, 300) constituant le carter de soupape, est réalisé un canal de fuite (respectivement 6 et 61) (figures 1 à 17).

**4.** Dispositif de soupape suivant la revendication 3, caractérisé en ce que, dans la position de fermeture de la soupape, les canaux de fuite (6, 61), et/ou leurs points d'étanchéité, sont coupés de l'enceinte intérieure des deux pièces (100, 200; 200, 300) constituant le carter de soupape, chacun par un organe de fermeture (4, 400), et en ce que, dans les deux autres positions de la soupape, les canaux de fuite (6, 61), et/ou leurs points d'étanchéité, en sont coupés par une pièce d'obturation (5, 51 ou 500) comportant un passage intérieur (figures 1 à 9 et figure 16).

**5.** Dispositif de soupape suivant la revendication 3, caractérisé en ce que, dans la position de fermeture de la soupape, les canaux de fuite (6, 61), et/ou leurs points d'étanchéité sont coupés de l'enceinte intérieure des deux pièces (100, 200; 200, 300) constituant le carter de soupape, par un organe de fermeture (401) et en ce que, dans les deux autres positions de la soupape, les canaux de fuite (6, 61), et/ou leurs points d'étanchéité, en sont coupés par une pièce d'obturation (5, 51 ou 501) comportant

11

chaque fois un passage intérieur (figures 10 à 15 et figure 17).

6. Dispositif de soupape suivant la revendication 4, caractérisé en ce que les organes de fermeture (4, 400) sont reliés de façon fixe entre eux par une tige (400a, 53), (figures 4 à 9).

7. Dispositif de soupape suivant l'une des revendications 4 à 6, caractérisé en ce que les pièces d'obturation (5 et 51) sont reliées de façon fixe•s] ˩Wî l'organe de fermeture (4, 400; 401) avec un certain écartement (s1) (figures 4 à 6; figures 10 à 12).

8. Dispositif de soupape suivant la revendication 7, caractérisé en ce que la distance (s1) procure approximativement une section d'ouverture correspondant à la section nominale du dispositif de soupape.

9. Dispositif de soupape suivant l'une des revendications 4 à 6, caractérisé en ce que les pièces d'obturation (5 et 51) sont rassemblées en une unité d'obturation (respectivement 500 et 401), cette dernière étant déplacée au moyen d'une tige (4a) (figures 7 à 9 et figures 13 à 15), en un mouvement relatif par rapport à l'organe de fermeture (4, 400; 401), au total d'une distance double (s2).

10. Dispositif de soupape suivant la revendication 9, caractérisé en ce que la distance double (s2) procure approximativement une section d'ouverture correspondant à la section nominale du dispositif de soupape.

11. Dispositif de soupape suivant l'une des revendications 4 à 10, caractérisé en ce que l'organe de fermeture (4, 400; 401), peut avoir sa longueur axiale, modifiée par un dispositif (404, 408; 405, 409) travaillant de façon télescopique, tandis qu'un organe élastique de liaison (406; 407) constitue un pontage matériel sur la distance séparant les organes de fermeture (4, 400; 402, 403) (figures 16 et 17).

Fig.1    Fig.2    Fig.3

Fig.4        Fig.5        Fig.6

Fig.7 Fig.8 Fig.9

Fig.10      Fig.11      Fig.12

16

Fig.13        Fig.14        Fig.15

Fig. 16          Fig. 17